# EUROPÄISCHE PATENTSCHRIFT

(11) **EP 2 170 690 B1**
(45) Veröffentlichungstag und Bekanntmachung des Hinweises auf die Patenterteilung: **15.05.2013**
(21) Anmeldenummer: 08784335.5
(22) Anmeldetag: 12.07.2008
(51) Int. Cl.: B62M 3/08

(54) **FAHRRADPEDAL**
BICYCLE PEDAL
PÉDALE DE VÉLO

(30) Priorität: 13.07.2007 DE 102007034882; 11.07.2008 DE 202008009511 U
(43) Veröffentlichungstag der Anmeldung: 07.04.2010
(73) Patentinhaber: Linden, David, 10997 Berlin (DE)
(72) Erfinder: Linden, David, 10997 Berlin (DE)
(74) Vertreter: Kietzmann, Manfred
(86) Internationale Anmeldenummer: PCT/DE2008/001152
(87) Internationale Veröffentlichungsnummer: WO 2009/010046

(56) Entgegenhaltungen:
- DE-U1- 9 200 883
- JP-A- 11 301 568
- US-A- 5 862 716
- US-A- 5 927 155
- US-A1- 2002 100 343

## Beschreibung

Die Erfindung betrifft ein Fahrradpedal wie sie insbesondere bei BMX (Bicycle-MotoCross)-Rädern oder Mountainbikes verwendet werden.

Im Gegensatz zu herkömmlichen Pedalen sind diese BMX-Pedale größer, robuster und aus Metall (Aluminium, Magnesium) gefertigt. Durch diese Materialien wird eine Gewichtsreduzierung auf ca. 320 g/Pedalepaar erreicht.

Um besseren Halt zu bieten, weisen die Pedale auf der Trittplatte eine Griffigkeit auf (DE 42 03 777 A1, US 66 47 826 B2) oder sind bei teueren Modellen mit austauschbaren Stahlstiften versehen. Die Pedale sind auf der Pedalachse mit BB-Kugellagern gelagert, bei hochwertigen Modellen mit langlebigen SB-Kugellagern.

Kennzeichnend für die Lagerung ist, dass die Pedale einen Tragkörper aufweisen, in dem die Lagerung vorgenommen wird und die Trittplatten auf oder in diese Tragkörper eingepaßt sind.

In der US 4 345 487 erfolgt dies durch ein Aufstecken, in der gattungsgemäßen US 59 27 155 durch ein Verschrauben. Der Tragkörper kann dabei zur Aufnahme einer Lagerhülse (WO 2007/009258 A1, US 6 647 826 B2) auch geteilt ausgebildet sein. Bei der US 6 647 826 B2 soll die auf den Tragkörper angeordnete abrasive Trittplatte eine Dicke von 0,7 mm aufweisen.

Nachteilig bei diesen Ausführungen ist, dass die Masse der Tragkörper wegen ihrer Tragfunktion für die Lager nur begrenzt reduzierbar ist und damit der Gewichtsreduzierung der Pedale insgesamt Grenzen gesetzt sind.

Aufgabe der Erfindung ist es, eine weitere Gewichtsreduzierung der Pedale zu erreichen und dabei die Pedale flach auszuführen. Gelöst wird diese Aufgabe mit den Merkmalen des Anspruches 1, vorteilhaft Ausgestaltungen sind Gegenstand der Unteransprüche.

Vorgeschlagen wird erfindungsgemäß ein Fahrradpedal, insbesondere für BMX-Fahrräder, bestehend aus einer vollflächigen Tritt- und einer vollflächigen Gegenplatte, die identisch ausgebildet sind, so dass je nach Stellung des Pedals die Trittplatte auch Gegenplatte sein kann und umgekehrt, zwischen der Trittplatte und der Gegenplatte ein den Abstand zwischen der Trittplatte und der Gegenplatte gewährleisteter Distanzkörper angeordnet ist, der Distanzkörper eine Bohrung zur Aufnahme einer Lagereinheit für die Pedalachse aufweist, wobei der verbleibende Materialsteg (a) zwischen der Bohrung und der Außenfläche des Distanzkörpers im Bereich von Tritt- und Gegenplatte gegen Null geht, so dass die Kraftübertragung von der Trittplatte nahezu direkt auf die Lagereinheit erfolgt, und die Verbindung von Tritt-und Gegenplatte durch mindestens zwei Verbindungselemente, jeweils beidseitig der Lagereinheit angeordnet, hergestellt ist und die Verbindungselemente die Fixierung der Lagereinheit gewährleistet und der Distanzkörper zwischen der Tritt- und Gegenplatte am äußeren Umfang eine Beschichtung aufweist, die auch die äußeren schmalen Umfangsflächen der Tritt- und Gegenplatte bedeckt und damit schützt.

Gegen Null gehen im hier gabrauchten simm bedeutet, dass die Höhe des Distanzkörpers nahezu gleich oder gleich dem Durchmesser der Bohrung für die Lagereinheit ist.

Damit wird technisch der Ansatz weiksentwickell, nämlich weg von einem Tragkörper für das Lager des Pedals und auf oder in dem Tragkörper befestigten Trittplatten hin zu einer

Trittkraft übertragung über die Tritt- und Gegenplatte direkt auf die Pedallager. Dem Distanzkörper kommt nur noch die Aufgabe zu, die Tritt- und Gegenplatte auf Distanz verbindbar zu machen und eine Fixierung der Lagerbuchse bzw. eines Lagers in der Pedalebene, d.h. parallel zur Tritt- und Gegenplatte, zu gewährleisten. Dabei kann der Distanzkörper auch selbst Bestandteil des Lagers sein, indem er über Lagereigenschaften verfügt.

Durch die Anordnung von Verbindungselementen zwischen Tritt- und Gegenplatte in unmittelbarer Nähe zur Lagerbuchse wird die Fixierung der Lagereinheit gewährleistet.

Die Folge ist, dass anstelle eines gewichtsintensiven Tragkörpers nur ein ausgesprochen leichter Distanzkörper notwendig ist, der darüber hinaus noch durch Hohlräume weiter gewichtsreduzierbar ist.

Vorgeschlagen wird auch ein Distanzkörper, der gebildet ist aus einem Vollmaterial im Bereich der Bohrung für die Pedalachse und der Anordnung der Verbindungselemente von Tritt- und Gegenplatte, und ansonsten aus Stegen, die einen umlaufenden Rand zwischen Tritt- und Gegenplatte fixieren.

Als Materialien für den Distanzkörper haben sich Kunststoffe, auch faserverstärkte, oder auch Holzschichten bewährt. Wie Versuche gezeigt haben, reicht selbst Polystyrol als Material für den Distanzkörper aus.

Als Material für die Tritt- bzw. Gegenplatte werden bevorzugt Edelstahl, Aluminium, Magnesium oder Titan oder andere leichte hochfeste Materialien, auch Verbundstoffe oder einer Kombination aus diesen, eingesetzt.

Da BMX-Räder bekanntermaßen hohen Belastungen ausgesetzt sind und das Pedal auch seitlich leicht einmal auf ein Hindernis trifft, weist der Distanzkörper eine den Distanzkörper seitlich umlaufende Beschichtung auf, die auch die äußeren schmalen Umfangsflächen der Tritt- und Gegenplatte bedeckt.

Neben der Schutzfunktion kann eine solche auslaufende Beschichtung gleichzeitig als Werbefläche dienen.

Die das Pedal auf der Pedalachse abstützenden Lager können unterschiedliche Ausführungsformen aufweisen. Bevorzugt sind folgende Ausführungen:
- Die Lagereinheit besteht aus zwei auf der Pedalachse angeordneten Lagern, die sich in einer Lagerbuchse abstützen, wobei die Lagerbuchse in die Bohrung eingesetzt und fixiert ist.
- Die Lagereinheit besteht aus zwei auf der Pedalachse angeordneten Lagern, von denen sich ein Lager in einer Lagerbuchse abstützt, wobei die Lagerbuchse in die Bohrung eingesetzt und fixiert ist, während das andere Lager sich unmittelbar in der Bohrung abstützt.
- Die Lagereinheit besteht aus mindestens einer Gleitpaarung zwischen der Pedalachse und einer über die Pedalachse geschobenen Lagerhülse, wobei die Lagerhülse in die Bohrung eingesetzt und fixiert ist.
- Die Lagereinheit besteht aus einer Gleitpaarung zwischen der Pedalachse und einer über die Pedalachse geschobenen Lagerhülse, wobei die Lagerhülse in die Bohrung eingesetzt und fixiert ist, und einem Lager, das sich in der Bohrung abstützt.
- Die Lagerhülse wird gebildet aus der Bohrung im Distanzkörper, so dass mindestens eine Gleitpaarung zwischen der Pedalachse und der Innenwand der Bohrung besteht, und die Pedalachse drehbar im Distanzkörper fixiert ist.

Um das Pedal gegenüber der Pedalachse in Pedalachsenrichtung zu fixieren, sieht eine bevorzugte Ausführung vor, dass in einem Abschnitt der Bohrung der Distanzkörper eine von der Tritt- und Gegenplatte verdeckbare Öffnung aufweist, so dass die eingesetzte Lagereinheit hier mittels Sprengring oder Clip fixierbar ist.

Eine solche Ausführung kann auch drin bestehen, dass die Bohrung für die Lagerbuchse oder -hülse mindestens einen ringnutartig vergrößerten Abschnitt aufweist und die Lagerbuchse oder -hülse mindestens eine nutartige Vertiefung besitzt, derart, dass ein in die nutartige Vertiefung eingreifender Sprengring oder Clip gleichzeitig in den nutartig vergrößerten Abschnitt eingreift und damit ein Verschieben des Pedalkörpers auf der Pedalachse verhindert wird. Der ringnutartig vergrößerte Abschnitt der Bohrung für die Lagerbuchse durchdringt dabei die Außenfläche des Distanzkörpers im Bereich des Materialsteges (a), so dass in diese entstehende Öffnung der Sprengring oder Clip einsetzbar ist.

Bei einer bevorzugten Ausführung ist weiter vorgesehen, dass mindestens eine der miteinander verbundenen Tritt- und Gegenplatte auf den Sprengring oder Clip einwirkt, so dass er spielfrei in der Verbindung Lagerbuchse/Lagerhülse-Distanzkörper fixiert ist.

Um unterschiedliche Lager entsprechend der Belastung zu verwenden (Rollenlager, Gleitlager) hat es sich bewährt, auch bei diesem Pedallager eine sich nach außen, d.h. eine sich nach außen weg vom Fahrrad verjüngende Pedalachse zu verwenden. Die Tragfähigkeit der Pedalachse wird dadurch nicht eingeschränkt, gleichzeitig wird das Gesamtgewicht Pedalachse/Pedal zusätzlich reduziert.

Das vorgeschlagene Pedal soll anhand der Zeichnungen erläutert werden.

Es zeigen:
- Fig. 1: Exposedarstellung,
- Fig. 2: Distanzkörper mit Lagerbuchse mit Pedalachse
- Fig. 3: Distanzkörper nur mit gelagerter Pedalachse,
- Fig. 4: Distanzkörper mit Stegen und
- Fig. 5: Distanzkörper mit Pedalachsenaufnahme und Rand.

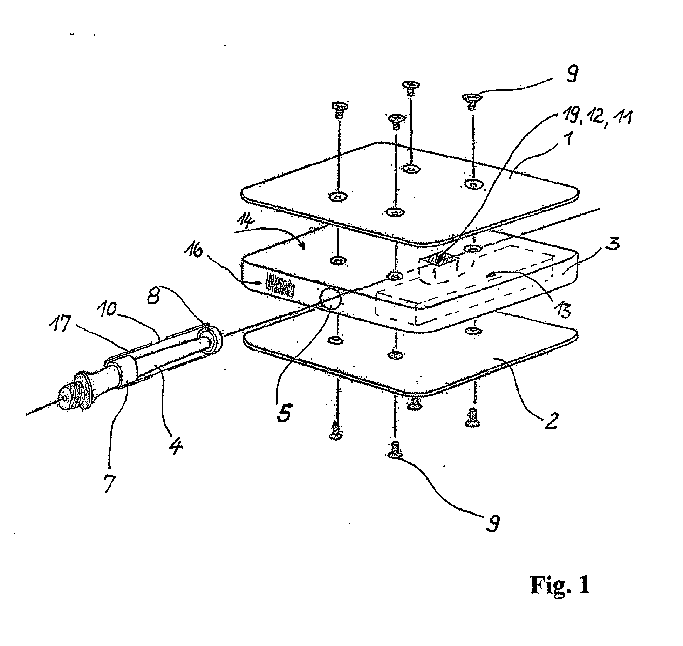

Fig. 1 zeigt in einer Exposedarstellung den grundsätzlichen Aufbau einer Ausführung mit einer Lagereinheit 6 bestehend aus einer Lagerbuchse 17 für das Innen- und das Außenlager 7, 8.

Zwischen der Tritt- und der Gegenplatte 1, 2 ist der Distanzkörper 3 angeordnet. Dabei sind Tritt- und Gegenplatte 1, 2 gleich ausgebildet, so dass beide als Trittplatte 1 dienen können und jeweils die andere dann die Gegenplatte 2 darstellt.

Die Tritt- und Gegenplatte 1, 2 sind mittels einer Schraubverbindung miteinander unter Einschluss des Distanzkörpers 3 miteinander verbunden. Die Schraubverbindung besteht aus zwei Verschraubungen 9 jeweils beidseitig der Bohrung 5 für die Lagerbuchse 17 und in unmittelbarer Nähe der Bohrung 5. In den Bohrungen für die dargestellten Senkkopfschrauben 9 ist jeweils eine Gewindebuchse angeordnet, in die die Verschraubungen 9 beidseitig eingreifen.

Der verbleibende Materialsteg (a) zwischen der Bohrung 5 und der Außenfläche des Distanzkörpers 3 im Bereich von Tritt- und Gegenplatte 1, 2 ist minimal, so dass die Kraftübertragung von der Trittplatte 1 nahezu direkt auf die Lagerbuchse 17 erfolgt.

Die Pedalachse 4 wird in der Lagerbuchse 17 mittels zweier Lager, dem Innenlager 7 und dem Außenlager 8, abgestützt.

Bezogen auf das Fahrrad ist das äußere Lager 8 ein Kugellager und das innere Lager 7 ein Gleitlager. Die Pedalachse 4 verjüngt sich zwischen dem als Gleitlager ausgebildeten Innenlager 7 und dem Kugellager des Außenlagers 8.

Die Bohrung 5 weist einen ringnutartig vergrößerten Abschnitt 11 auf und die Lagerbuchse 17 besitzt eine nutartige Vertiefung 10, derart, dass ein in die nutartige Vertiefung 10 eingreifender Sprengring oder Clip 12 gleichzeitig in den nutartig vergrößerten Abschnitt 11 eingreift und damit ein Verschieben des Pedalkörpers auf der Pedalachse 4 verhindert ist.

Der ringnutartig vergrößerte Abschnitt 11 der Bohrung 5 für die Lagerbuchse 17 durchdringt dabei die Außenfläche des Distanzkörpers 3 im Bereich des Materialsteges (a), so dass in diese entstehende Öffnung 19 der Sprengring oder Clip 12 einsetzbar ist. Natürlich kann die Öffnung 19 auch noch zusätzlich vergrößert werden.

Der Distanzkörper 3 weist von der Bohrung 5 entfernt Hohlräume 13, 14 auf. Seine Außenform ist bevorzugt romboid ausgebildet. Die äußere Beschichtung 16 wird bis über die schmale Umfangsfläche der Tritt- und der Gegenplatte 1, 2 geführt und schützt diese mit.

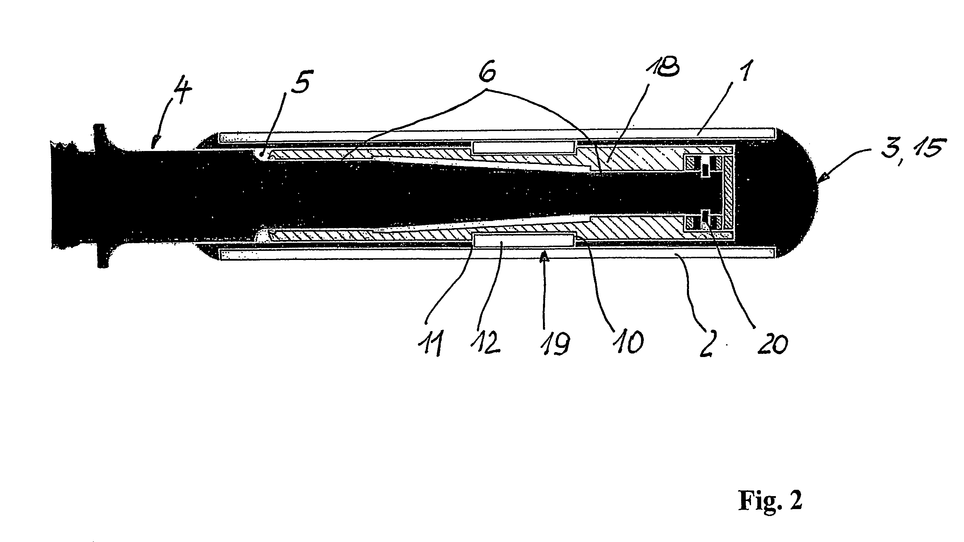

Fig. 2 zeigt ein Pedal auf der Pedalachse 4 mit Distanzkörper 3 mit Lagerhülse 18 und Tritt- und Gegenplatte 1, 2. Die äußeren schmalen Umfangsflächen der Tritt- und der Gegenplatte 1, 2 sind in den Distanzkörper 3 eingebettet.

Die Lagereinheit 6 besteht hier aus zwei Gleitpaarungen zwischen der Pedalachse 4 und der über die Pedalachse 4 geschobenen Lagerhülse 18, wobei die Lagerhülse 18 in die Bohrung 5 eingesetzt und fixiert ist. Die Pedalachse 4 verjüngt sich zwischen dem Innenlager und dem Außenlager (jeweils Gleitpaarungen mit der Lagerhülse 18.

Zur Fixierung weist der Distanzkörper 3 eine von der Tritt-und Gegenplatte 1, 2 verdeckbare Öffnung 19 in einem Abschnitt der Bohrung 5 auf, so dass die eingesetzte Lagereinheit 6 hier mittels Sprengring oder Clip 12 fixierbar ist. In die Bohrung 5 wurde dazu ein ringnutartig vergrößerten Abschnitt 11 eingebracht und die Lagerhülse 18 mit einer nutartigen Vertiefung 10 versehen, derart, dass der in die nutartige Vertiefung 10 eingreifende Sprengring oder Clip 12 gleichzeitig in den nutartig vergrößerten Abschnitt 11 eingreift und damit ein Verschieben des Pedalkörpers auf der Pedalachse 4 verhindert. Die Lagerhülse 18 selbst ist am äußeren Ende durch eine Sprengring 20 gegen ein Verschieben auf der Pedalachse 4 gesichert.

Mindestens eine der miteinander verbundenen Tritt- oder Gegenplatte 1, 2 wirkt dabei auf den Sprengring oder Clip 12 ein, so dass der Sprengring oder Clip 12 spielfrei in der Verbindung Lagerbuchse 17 - Distanzkörper 3 oder Lagerhülse 18 - Distanzkörper 3 fixiert ist.

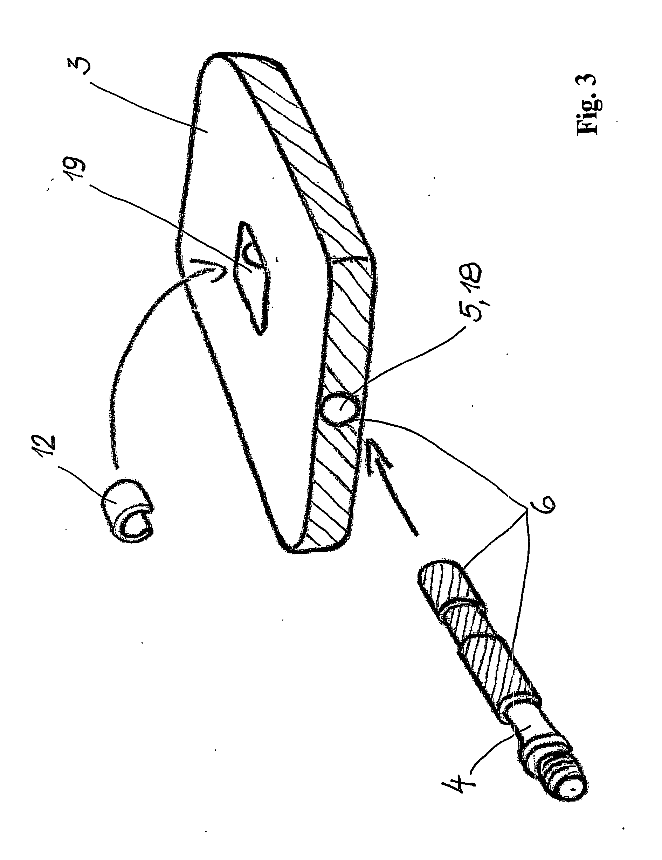

Bei der Ausführung gemäß Fig. 3 wird die Lagerhülse 18 aus der Bohrung 5 im Distanzkörper 3 gebildet, wobei zwei Gleitpaarungen zwischen der Pedalachse 4 und der Innenwand der Bohrung 5 bestehen. Die Pedalachse 4 ist drehbar im Distanzkörper 3 fixiert, wobei auch hier wieder die bereitsbeschriebene Clipverbindung verwendet wird.

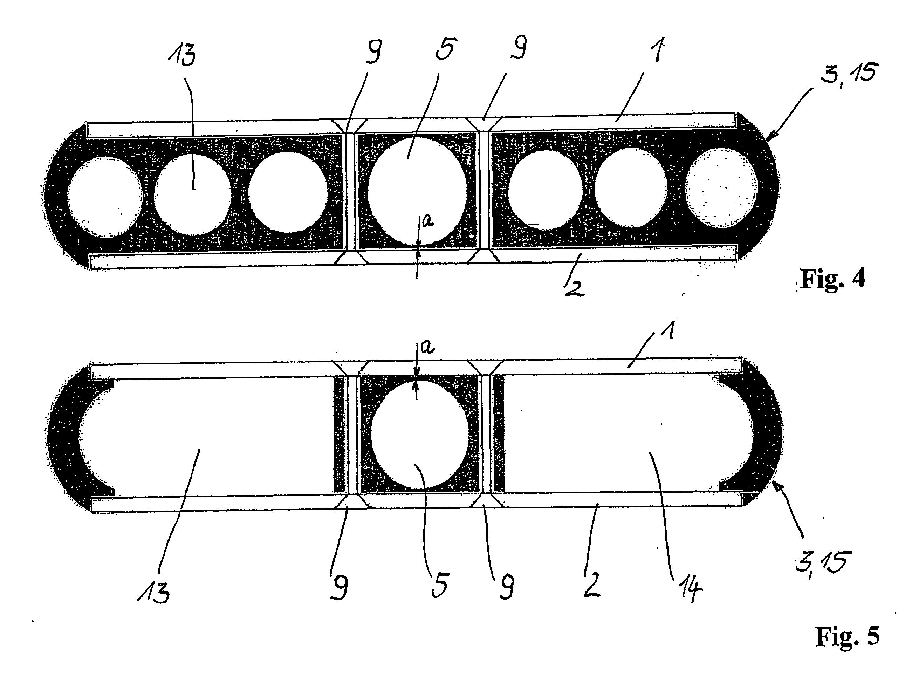

In den Fig. 4 und 5 sind Ausführungen des Distanzkörpers 3 dargestellt, nämlich in Fig. 4 ein Distanzkörper 3 mit Stegen, die den Rand 15 halten und der aus einem Vollmaterial im Bereich der Bohrung 5 und der Anordnung der Verbindungselemente 9 besteht, und in Fig. 5 ein Distanzkörper 3 mit Pedalachsenaufnahme und umlaufendem Rand 15, der ausschließlich mit der Pendalachsenaufnahme verbunden ist.

Der Distanzkörper 3 weist eine Bohrung 5 zur Aufnahme einer Lagereinheit 6 für die Pedalachse 4 auf, wobei der verbleibende Materialsteg (a) zwischen der Bohrung 5 und der Außenfläche des Distanzkörpers 3 im Bereich von Tritt- und Gegenplatte 1, 2 gegen Null geht, so dass die Kraftübertragung von der Trittplatte 1 nahezu direkt auf die Lagereinheit 6 erfolgt. Die Verbindung von Tritt- und Gegenplatte 1, 2 ist durch Verbindungselemente 9, jeweils beidseitig der Lagereinheit 6 angeordnet, hergestellt. Als bevorzugte Verbindung findet eine Schraubverbindung unter Verwendung von Senkkopfschrauben 9, die jeweils paarweise von beiden Seiten in eine Gewindebuchse, angeordnet in Bohrungen im Distanzkörper 3, eingreifen, Anwendung.

### Bezugszeichenliste

| | |
|---|---|
| 1 | Trittplatte (Gegenplatte) |
| 2 | Gegenplatte (Trittplatte) |
| 3 | Distanzkörper |
| 4 | Pedalachse |
| 5 | Bohrung |
| 6 | Lagereinheit |
| 7 | Innenlager |
| 8 | Außenlager |
| 9 | Verbindungselemente u.a. Senkkopfschrauben |
| 10 | nutartige Vertiefung im Außenmantel der Lagereinheit 6 |
| 11 | ringnutartige vergrößerter Abschnitt der Bohrung 5 |
| 12 | Sprengring oder Clip |
| 13 | Hohlraum |
| 14 | Hohlraum |
| 15 | umlaufender Rand |
| 16 | äußere Beschichtung |
| 17 | Lagerbuchse |
| 18 | Lagerhülse |
| 19 | Öffnung |
| 20 | Sprengring |
| | |
| a | Material des Distanzkörpers |

## Patentansprüche

1. Fahrradpedal, bestehend aus
- einer vollflächigen Tritt- und einer vollflächigen Gegenplatte (1, 2), die identisch ausgebildet sind, so dass je nach Stellung des Pedals die Trittplatte (1) auch Gegenplatte (2) sein kann und umgekehrt,
- zwischen der Trittplatte (1) und der Gegenplatte (2) ein den Abstand zwischen der Trittplatte und der Gegenplatte (1, 2) gewährleistender Distanzkörper (3) angeordnet ist,
- der Distanzkörper (3) eine Bohrung (5) zur Aufnahme einer Lagereinheit (6) für die Pedalachse (4) aufweist, wobei der verbleibende Materialsteg (a) zwischen der Bohrung (5) und der Außenfläche des Distanzkörpers (3) im Bereich von Tritt- und Gegenplatte (1, 2) gegen Null geht, so dass die Kraftübertragung von der Trittplatte (1) nahezu direkt auf die Lagereinheit (6) erfolgt,
- die Verbindung von Tritt- und Gegenplatte (1, 2) durch mindestens zwei Verbindungselemente (9), jeweils beidseitig der Lagereinheit (6) angeordnet, hergestellt ist, die die Fixierungen der Lagereinheit (6) gewährleisten, und dachurch gekennzeichnet, dass
- der Distanzkörper (3) zwischen der Tritt- und Gegenplatte (1, 2) am äußeren Umfang eine Beschichtung (16) aufweist, die auch die äußeren schmalen Umfangsflächen der Tritt-und der Gegenplatte (1, 2) bedeckt und damit schützt.

2. Fahrradpedal nach Anspruch 1, **dadurch gekennzeichnet, dass**
der Distanzkörper (3) gebildet ist aus einem Vollmaterial im Bereich der Bohrung (5) und der Anordnung der Verbindungselemente (9), und ansonsten aus Stegen, die einen umlaufenden Rand (15) zwischen Tritt- und Gegenplatte (1, 2) fixieren.

3. Fahrradpedal nach Anspruch 1 oder 2, **dadurch gekennzeichnet, dass**
der Distanzkörper (3) aus laminierten Holzschichten besteht.

4. Fahrradpedal nach einem der Ansprüche 1 bis 3, **dadurch gekennzeichnet, dass**
der Distanzkörper (3) eine romboide Form aufweist.

5. Fahrradpedal nach einem der Ansprüche 1 bis 4, **dadurch gekennzeichnet, dass**
der Distanzkörper (3) von der Bohrung (5) entfernt einen oder mehrere Hohlräume (13, 14) aufweist und in die Öffnungen der Hohlräume (13, 14) von außen sichtbare Werbemittel eingesetzt sind und/oder der umlaufende Rand (15) und/oder die Beschichtung (16) und/oder der Distanzkörper (3) nach außen weisende Werbeaufdrucke aufweisen.

6. Fahrradpedal nach einem der Ansprüche 1 bis 5, **dadurch gekennzeichnet, dass**
die Lagereinheit (6) besteht aus zwei auf der Pedalachse angeordneten Lagern (7, 8), von denen sich ein Lager (7) oder (8) in einer Lagerbuchse (17) abstützt, wobei die Lagerbuchse (17) in die Bohrung (5) eingesetzt und fixiert ist, während das andere Lager (8) oder (7) sich unmittelbar in der Bohrung (5) abstützt.

7. Fahrradpedal nach einem der Ansprüche 1 bis 5, **dadurch gekennzeichnet, dass**
die Lagereinheit (6) besteht aus einer Gleitpaarung zwischen der Pedalachse (4) und einer über die Pedalachse (4) geschobenen Lagerhülse (18), wobei die Lagerhülse (18) in die Bohrung (5) eingesetzt und fixiert ist, und einem Lager (7) oder (8), das sich in der Bohrung (5) abstützt.

8. Fahrradpedal nach Anspruch 6 oder 7, **dadurch gekennzeichnet, dass**
das dem Fahrradrahmen am nächsten angeordnete Innenlager (7) auf der Pedalachse (4) in der Lagerbuchse (17) oder der Lagerhülse (18) fixiert ist, während das Außenlager (8) innerhalb des Distanzkörpers (3) angeordnet und durch den Verbund zwischen Tritt- und Gegenplatte (1,2) fixiert ist.

9. Fahrradpedal nach einem der Ansprüche 1 bis 8, **dadurch gekennzeichnet, dass**
die Pedalachse (4) sich zwischen dem Innenlager (7) und dem Außenlager (8) verjüngt.

10. Fahrradpedal nach einem der Ansprüche 1 bis 9, **dadurch gekennzeichnet, dass**
der Distanzkörper (3) eine von der Tritt- und Gegenplatte (1, 2) verdeckbare Öffnung (19) in einem Abschnitt der Bohrung (5) aufweist, so dass die eingesetzte Lagereinheit (6) in der Öffnung (19) mittels Sprengring oder Clip (12) fixierbar ist.

11. Fahrradpedal nach Anspruch 10, **dadurch gekennzeichnet, dass**
die Bohrung (5) mindestens einen ringnutartig vergrößerten Abschnitt (11) aufweist und die Lagerbuchse (17) oder die Lagerhülse (18) mindestens eine nutartige Vertiefung (10) besitzt, derart, dass ein in die nutartige Vertiefung (10) eingreifender Sprengring (12) oder Clip gleichzeitig in den nutartig vergrößerten Abschnitt (11) eingreift und damit ein Verschieben des Pedalkörpers auf der Pedalachse (4) verhindert ist.

12. Fahrradpedal nach einem der Ansprüche 10 oder 11, **dadurch gekennzeichnet, dass** mindestens eine der miteinander verbundenen Tritt- oder Gegenplatte (1, 2) auf den Sprengring oder Clip (12) einwirkt, so dass der Sprengring oder Clip (12) spielfrei in der Verbindung Lagerbuchse (17) - Distanzkörper (3) oder Lagerhülse (18) - Distanzkörper (3) fixiert ist.

13. Fahrradpedal nach einem der Ansprüche 1 bis 12, **dadurch gekennzeichnet, dass**
die Tritt- und die Gegenplatte (1, 2) aus Edelstahl, oder Magnesium oder Aluminium oder Titan oder einem Verbundstoff oder einer Kombination aus diesen besteht.

## Claims

1. A bicycle pedal, consisting of
- a full-surface pedal plate and a full-surface counter plate (1, 2) of identical design such that, depending on the position of the pedal, the pedal plate (1) can also be the counter plate (2) and vice versa,
- that a spacer (3) is provided between the pedal plate (1) and the counter plate (2) to ensure a distance between the pedal plate and the counter plate (1, 2),
- the spacer (3) comprises a hole (5) for receiving a bearing unit (6) for the pedal spindle (4), wherein the remaining material web (a) between the hole (5) and the outer surface of the spacer (3) approaches zero in the region of the pedal plate and counter plate (1, 2) so that the force is almost directly transmitted from the pedal plate (1) to the bearing unit (6),
- pedal plate and counter plate (1, 2) are joined by at least two joining elements (9) positioned on both sides of the bearing unit (6) that ensure fastening of the bearing unit (6), and **characterized in that**
- the spacer (3) comprises a coating (16) on its outer periphery between the pedal plate and counter plate (1, 2) which also covers and thus protects the narrow outer peripheral surfaces of the pedal plate and counter plate (1, 2).

2. The bicycle pedal according to claim 1, **characterized in that**
the spacer (3) is formed of a solid material in the region of the hole (5) and where the joining elements (9) are provided, otherwise it is formed of webs that hold a continuous all-round edge (15) between the pedal plate and counter plate (1, 2).

3. The bicycle pedal according to claim 1 or 2, **characterized in that**
the spacer (3) consists of laminated layers of wood.

4. The bicycle pedal according to any one of claims 1 to 3, **characterized in that**
the spacer (3) has a rhomboid shape.

5. The bicycle pedal according to any one of claims 1 to 4, **characterized in that**
the spacer (3) comprises one or several hollow spaces (13, 14) at a distance from the hole (5), and advertising materials that are visible from the outside are inserted into the openings of said hollow spaces (13, 14), and/or the continuous all-round edge (15) and/or the coating (16) and/or the spacer (3) have outward facing advertising imprints.

6. The bicycle pedal according to any one of claims 1 to 5, **characterized in that**
the bearing unit (6) consists of two bearings (7, 8) located on the pedal spindle,one bearing (7) or (8) resting in a bearing shell (17), said bearing shell (17) being inserted and fixed in the hole (5), while the other bearing (8) or (7) rests directly in the hole (5).

7. The bicycle pedal according to any one of claims 1 to 5, **characterized in that**
the bearing unit (6) consists of a slide pairing between the pedal spindle (4) and a bearing bushing (18) slid over the pedal spindle (4), said bearing bushing (18) being inserted and fixed in the hole (5), and a bearing (7) or (8) that rests in the hole (5).

8. The bicycle pedal according to claim 6 or 7, **characterized in that**
the inside bearing (7) positioned closest to the bicycle frame is attached to the pedal spindle (4) in the bearing shell (17) or the bearing bushing (18) while the outside bearing (8) is located inside the spacer (3) and fixed by the connection between the pedal plate and counter plate (1,2).

9. The bicycle pedal according to any one of claims 1 to 8, **characterized in that**
the pedal spindle (4) tapers between the inside bearing (7) and outside bearing (8).

10. The bicycle pedal according to any one of claims 1 to 9, **characterized in that**
the spacer (3) comprises an opening (19) in a section of the hole (5) that an be covered by the pedal plate and counter plate (1, 2) such that the inserted bearing unit (6) can be fixed in said opening (19) using a snap ring or clip (12).

11. The bicycle pedal according to claim 10, **characterized in that**
the hole (5) comprises at least one section (11) enlarged like an annular groove and the bearing shell (17) or bearing bushing (18) has at least one groove-like indentation (10) such that a snap ring (12) or clip that engages in said groove-like indentation (10) at the same time engages in said section (11) enlarged like an annular groove, which prevents the pedal body from moving on the pedal spindle (4).

12. The bicycle pedal according to any one of claims 10 or 11, **characterized in that**
at least one of the joined pedal plate or counter plate (1, 2) acts on the snap ring or clip (12) such that the snap ring or clip (12) is fixed without clearance in the bearing shell (17) - spacer (3) or bearing bushing (18) - spacer (3) connection.

13. The bicycle pedal according to any one of claims 1 to 12, **characterized in that**
the pedal plate and counter plate (1, 2) consists of stainless steel or magnesium or aluminum or titanium or a composite material or a combination thereof.

## Revendications

1. Pédale de vélo, composée
- d'une plaque d'appui pleine et d'une plaque opposée pleine (1, 2) qui sont de constitution identique de sorte que, en fonction de la position de la pédale, la plaque d'appui (1) peut être également la plaque opposée (2) et inversement,
- entre la plaque d'appui (1) et la plaque opposée (2), il est disposé un corps d'écartement (3) garantissant la distance entre la plaque d'appui et la plaque opposée (1, 2),
- le corps d'écartement (3) présente un alésage (5) destiné à recevoir une unité de palier (6) pour l'axe de pédale (4), la nervure matérielle (a) restante entre l'alésage (5) et la face extérieure du corps d'écartement (3) tendant vers zéro dans la zone de la plaque d'appui et de la plaque opposée (1, 2) de telle sorte que la transmission de force à partir de la plaque d'appui (1) s'effectue quasiment directement sur l'unité de palier (6),
- la liaison de la plaque d'appui et de la plaque opposée (1, 2) est réalisée par au moins deux éléments de liaison (9), respectivement disposés de part et d'autre de l'unité de palier (6), qui garantissent les fixations de l'unité de palier (6), et **caractérisée en ce que**
- le corps d'écartement (3) entre la plaque d'appui et la plaque opposée (1, 2) présente sur la circonférence extérieure un revêtement (16) qui couvre, et protège ainsi, également les faces circonférentielles étroites extérieures de la plaque d'appui et de la plaque opposée (1, 2).

2. Pédale de vélo selon la revendication 1, **caractérisée en ce que**
le corps d'écartement (3) est formé d'un matériau plein dans la zone de l'alésage (5) et de l'agencement des éléments de liaison (9), et sinon de nervures qui fixent un bord rotatif (15) entre la plaque d'appui et la plaque opposée (1, 2).

3. Pédale de vélo selon la revendication 1 ou 2, **caractérisée en ce que** le corps d'écartement (3) est constitué de couches de bois stratifiées.

4. Pédale de vélo selon une des revendications 1 à 3, **caractérisée en ce que** le corps d'écartement (3) présente une forme rhomboïdale.

5. Pédale de vélo selon une des revendications 1 à 4, **caractérisée en ce que**
le corps d'écartement (3) présente, à distance de l'alésage (5), une ou plusieurs cavités (13, 14), et **en ce que** des moyens publicitaires visibles de l'extérieur sont introduits dans les ouvertures des cavités (13, 14) et/ou **en ce que** le bord rotatif (15) et/ou le revêtement (16) et/ou le corps d'écartement (3) présentent des impressions publicitaires dirigées vers l'extérieur.

6. Pédale de vélo selon une des revendications 1 à 5, **caractérisée en ce que**
l'unité de palier (6) se compose de deux paliers (7, 8) disposés sur l'axe de pédale, dont un palier (7) ou (8) repose dans un coussinet (17), le coussinet (17) étant introduit et fixé dans l'alésage (5), tandis que l'autre palier (8) ou (7) repose directement dans l'alésage (5).

7. Pédale de vélo selon une des revendications 1 à 5, **caractérisée en ce que**
l'unité de palier (6) se compose d'un appariement glissant entre l'axe de pédale (4) et une douille de palier (18) poussée sur l'axe de pédale (4), la douille de palier (18) étant introduite et fixée dans l'alésage (5), et d'un palier (7) ou (8) qui repose dans l'alésage (5).

8. Pédale de vélo selon la revendication 6 ou 7, **caractérisée en ce que**
le palier intérieur (7) disposé le plus près du cadre de vélo est fixé sur l'axe de pédale (4) dans le coussinet (17) ou dans la douille de palier (18), tandis que le palier extérieur (8) est disposé à l'intérieur du corps d'écartement (3) et est fixé par l'assemblage entre la plaque d'appui et la plaque opposée (1, 2).

9. Pédale de vélo selon une des revendications 1 à 8, **caractérisée en ce que**
l'axe de pédale (4) se rétrécit entre le palier intérieur (7) et le palier extérieur (8).

10. Pédale de vélo selon une des revendications 1 à 9, **caractérisée en ce que**
le corps d'écartement (3) présente, dans un tronçon de l'alésage (5), un orifice (19) pouvant être masqué par la plaque d'appui et la plaque opposée (1, 2) de sorte que l'unité de palier (6) introduite peut être fixée dans l'orifice (19) au moyen d'un circlip ou d'une agrafe (12).

11. Pédale de vélo selon la revendication 10, **caractérisée en ce que**
l'alésage (5) présente au moins un tronçon (11) agrandi à la façon d'une gorge de retenue, et **en ce que** le coussinet (17) ou la douille de palier (18) possède au moins un creux (10) de type rainure de telle sorte qu'un circlip (12) ou clip engrenant dans le creux (10) de type rainure engrène simultanément dans le tronçon (11) agrandi à la façon d'une rainure, et qu'ainsi un déplacement du corps de pédale sur l'axe de pédale (4) est empêché.

12. Pédale de vélo selon une des revendications 10 ou 11, **caractérisée en ce**
**qu'**au moins une plaque parmi la plaque d'appui et la plaque opposée (1, 2) raccordées entre elles agit sur le circlip ou clip (12) de telle sorte que le circlip ou clip (12) est fixé sans jeu dans la liaison coussinet (17) - corps d'écartement (3) ou douille de palier (18) - corps d'écartement (3).

13. Pédale de vélo selon une des revendications 1 à 12, **caractérisée en ce que**
la plaque d'appui et la plaque opposée (1, 2) sont réalisées en acier spécial, ou en magnésium ou en aluminium ou en titane ou dans un matériau composite ou dans une combinaison de ces matériaux.
